(19) Europäisches Patentamt
European Patent Office
Office européen des brevets

(11) **EP 1 935 908 B1**

(12) **EUROPEAN PATENT SPECIFICATION**

(45) Date of publication and mention
of the grant of the patent:
**10.10.2012 Bulletin 2012/41**

(21) Application number: **06796680.4**

(22) Date of filing: **23.08.2006**

(51) Int Cl.:
**C08F 26/06** [(2006.01)]     **C11D 3/37** [(2006.01)]
**C11D 7/32** [(2006.01)]

(86) International application number:
**PCT/JP2006/316516**

(87) International publication number:
**WO 2007/023862 (01.03.2007 Gazette 2007/09)**

(54) **DYE TRANSFER INHIBITOR AND DETERGENT COMPOSITION FOR LAUNDERING**

FARBSTOFFTRANSFERINHIBITOR UND WASCHMITTELZUSAMMENSETZUNG

INHIBITEUR DE TRANSFERT DE COLORANT ET COMPOSITION DÉTERGENTE DE BLANCHISSAGE

(84) Designated Contracting States:
**DE GB**

(30) Priority: **26.08.2005   JP 2005246630**

(43) Date of publication of application:
**25.06.2008   Bulletin 2008/26**

(73) Proprietor: **Nippon Shokubai Co.,Ltd.
Osaka-shi, Osaka 541-0043 (JP)**

(72) Inventors:
• **IMAI, Daisuke
  Suita-shi, Osaka 564-0024 (JP)**
• **IZUMI, Keiko
  Osaka-shi, Osaka 532-0012 (JP)**

(74) Representative: **Brehm, Hans-Peter et al
Hansmann & Vogeser
Patent- und Rechtsanwälte
Maximilianstrasse 4b
82319 Starnberg (DE)**

(56) References cited:
**JP-A- 07 509 525     JP-A- 10 501 573
JP-A- 2001 354 723     JP-A- 2002 069 115
JP-A- 2002 322 223**

• **Sigma-Aldrich: "Reference : Polymer Properties Viscosity" XP002566688 Retrieved from the Internet: URL:http://www.sigmaaldrich.com/etc/medial ib/docs/Aldrich/General_Information/viscos ity.Par.0001.File.tmp/viscosity.pdf> [retrieved on 2010-02-03]**
• **AKASHI, MITSURU ET AL: "Synthesis and polymerization of a styryl-terminated oligovinylpyrrolidone macromonomer" ANGEWANDTE MAKROMOLEKULARE CHEMIE , 132, 81-9 CODEN: ANMCBO; ISSN: 0003-3146, 1985, XP002566689**

**Description**

TECHNICAL FIELD

The present invention relates to dye transfer inhibitors and laundry detergent compositions. More specifically, the present invention relates to a dye transfer inhibitor containing a vinyl lactam unit-containing polymer such as polyvinylpyrrolidone and polyvinylcaprolactam and a laundry detergent composition containing such an inhibitor.

BACKGROUND ART

Vinyl lactam unit-containing polymers such as polyvinylpyrrolidone and polyvinylcaprolactam are known to have various characteristics attributed to the N-vinyl cyclic lactam structure. Therefore, such polymers have been noted as a useful industrial product. For example, polyvinylpyrrolidone has been used in a laundry detergent composition. Such a polymer forms a complex compound with a dye which elutes into a washing liquid from a colored fabric to exhibit an effect of dispersing the dye, thereby inhibiting the dye from transferring into other fabrics (dye transfer-inhibiting effect). Thus, such a vinyl lactam unit-containing polymer (hereinafter, also referred to as a vinyl lactam polymer) is essential as a dye transfer inhibitor.

A surfactant has been ordinarily used as a washing component in a detergent. Particularly in a laundry detergent, an anionic surfactant has been widely used. In this case, the vinyl lactam polymer and the surfactant interact with each other. Therefore, it is needed to prevent the interaction from deteriorating functions of the dye transfer inhibitor. Particularly, the use of an anionic surfactant causes a problem in that the vinyl lactam polymer and the surfactant interact with each other to aggregate and thereby the functions as the dye transfer inhibitor are deteriorated. Therefore, it is needed that the vinyl lactam unit-containing polymer can effectively exhibit the dye transfer-inhibiting ability also in such a case.

For example, Canadian patent No. 994635 on page 19 and Japanese Patent No. 3272362 on page 1 each disclose a color transfer inhibitor which is used in a detergent and contains polyvinylpyrrolidone or a copolymer formed from 1-vinylpyrrolidone and 1-vinylimidazole, as a conventional dye transfer inhibitor including a vinyl lactam unit-containing polymer. Such a color transfer agent had room for improvement in order to exhibit the dye transfer-inhibiting effect particularly in the presence of an anionic surfactant, which has been widely used in a laundry detergent.

For this problem, for example, Japanese Patent No. 3272359 on pages 1 and 2 discloses a detergent additive containing a copolymer formed from 1-vinylpyrrolidone, 1-vinylimidazole, and a cationic monomer, as a detergent capable of exhibiting the dye transfer-inhibiting effect in the presence of an anionic surfactant. In addition, for example, Japanese Kokai Publication No. 2001-517730 on pages 2, 8 to 12 discloses a laundry detergent composition which contains at least 1% by weight of a surfactant and a water-soluble poly(vinylpyridine betaine) containing a quaternary nitrogen and a carboxylic acid salt or a copolymer thereof at an amount enough to inhibit the dye transfer. Further, for example, Japanese Kokai Publication No. 2002-20421 on pages 1 and 2 discloses a laundry detergent composition including a water-soluble polyvinylpyridinium derivative containing an anionic site selected from quaternary nitrogen and sulfonate and/or carboxylate functionality. These laundry detergent compositions still had room for improvement in order to exhibit the dye transfer-inhibiting effect particularly in the presence of a highly concentrated anionic surfactant.

The Document EP 1 219 647 A1 is related to a process for producing vinylpyrrolidone polymer. The process comprises a step wherein a water-soluble organic peroxide and a sulfite are added to an aqueous vinylpyrrolidone solution, and the resulting aqueous solution is subjected to radicalic polymerization conditions, It is said that this process provides vinylpyrrolidone polymer low in colour, low in bad smell and extremely low in impurity content. Further, it is said that the vinylpyrrolidone polymer may comprise a molecular weight according to a K value of from 10 to 120. However, the Examples support only vinylpyrrolidone polymer having a K value of 93.4 (Example 1), or having a K value of 31.5 (Example 2) or having a K value of 19.9 (Example 3). This document does not mention any dye transfer-inhibiting property of the thus prepared vinylpyrrolidone polymer.

In addition, for example, Japanese Kokai Publication No. Hei-11-71414 on page 1 discloses a method for producing a highly concentrated aqueous solution of a low-molecular-weight homopolymer of N-vinylpyrrolidone by a radical solution polymerization using $H_2O_2$ as an initiator in an aqueous solution. In such a method, a highly concentrated aqueous solution of a low-molecular-weight polymer of N-vinylpyrrolidone by polymerizing N-vinylpyrrolidone in the presence of 0.1 to 30% by weight, based on the N-vinylpyrrolidone, of a polymerization modifier selected from $C_1$-$C_6$ alkanols, hydroxylamine salts and water-soluble compounds containing sulfur in a combined form. In Examples, a method for producing a highly concentrated aqueous solution of a low-molecular-weight polymer of N-vinylpyrrolidone by polymerizing the N-vinylpyrrolidone using $H_2O_2$ as an initiator and 4.3% by weight of mercaptoethanol based on the N-vinylpyrrolidone as a polymerization modifier.

However, the low-molecular-weight polymer produced by this production method is not aimed to improve the dye transfer-inhibiting effect. Accordingly, there was room for improvement in order to exhibit a sufficient dye transfer-inhibiting effect in the presence of an anionic surfactant during washing.

DISCLOSURE OF THE INVENTION

Problem to be Solved by the Invention

The present invention has been made in view of the above-mentioned state of the art. The present invention has an object to provide a dye transfer inhibitor capable of exhibiting a dye transfer-inhibiting effect in the presence of a surfactant during washing, and exhibiting an excellent dye transfer-inhibiting effect particularly in the presence of an anionic surfactant.

Means for Solving the Problem

The present inventors made various investigations on a dye transfer inhibitor capable of exhibiting a dye transfer-inhibiting effect in the presence of an anionic surfactant during washing. Then, the inventors noted that if the inhibitor included, as an essential component, a polymer containing 90% by weight or more of a vinyl lactam unit and having a K value of less than 28, the inhibitor could improve an ability of dispersing a dye in washing liquid, thereby improving the dye transfer-inhibiting effect. The inventors found that it is important that said polymer should contain sulfur derived from a sulfite used in the course of the preparation thereof. Further, the inventors found that if the inhibitor included an acid group-containing chain transfer agent as an essential component, particularly if the acid group-containing chain transfer agent was bonded to the end of the vinyl lactam unit-containing polymer, the operation and effects for the dye could be improved and that particularly in the presence of an anionic surfactant, the inhibitor could sufficiently exhibit performances needed for the dye transfer inhibitor. As a result, the above-mentioned problems could be admirably solved. Performances of the vinyl lactam unit-containing polymer are deteriorated due to the interaction with an anionic surfactant. In the present invention, however, it would appear that the function of the acid group-containing chain transfer agent could prevent the vinyl lactam polymer from deteriorating the performances in the presence of an anionic surfactant and also enhance the interaction with the dye to disperse it, thereby exhibiting the dye transfer-inhibiting effect.

Accordingly, a first aspect of the present invention concerns a dye transfer inhibitor comprising a polymer containing 90% by weight or more of vinyl lactam units wherein said polymer comprises a K value of from 12 to 18; and said polymer contains sulfur derived from a sulfite, and the content of said sulfur derived from a sulfite amounts of from 0.1 to 2.0 % by weight, referring to the weight of the polymer; and said dye transfer inhibitor contains an acid group containing chain transfer agent.

A second aspect of the present invention concerns a laundry detergent composition comprising said dye transfer inhibitor.

A third aspect of the present invention concerns a vinyl lactam homopolymer wherein said vinyl lactam homopolymer comprises a K value of from 12 to 18; and said vinyl lactam homopolymer contains sulfur derived from a sulfite; and the content of said sulfur derived from a sulfite amounts of from 0.1 to 2.0 % by weight, referring to the weight of the polymer; and said vinyl lactam homopolymer contains ammonia in a content of from 0.3 % by weight or less.

A fourth aspect of the present invention concerns a vinyl lactam copolymer wherein said vinyl lactam copolymer comprises a K value of from 12 to 18; and said vinyl lactam copolymer contains sulfur derived from a sulfite; and the content of said sulfur derived from a sulfite amounts of from 0.1 to 2.0 % by weight, referring to the weight of the polymer.

A fifth aspect of the present invention concerns a method for producing said vinyl lactam copolymer under radicalic polymerization conditions, wherein said polymerization is performed in an aqueous solution having a pH of from 5 to 10; and using hydroperoxide and an alkali metal sulfite.

A sixth aspect of the present invention concerns an alternative method for producing said vinyl lactam copolymer comprising a step of performing a polymerization reaction using a persulfate, a sulfite, and a heavy metal compound.

The present invention is mentioned in more detail below.

The polymer contained in the dye transfer inhibitor of the present invention essentially contains a vinyl lactam unit. According to this, the inhibitor is provided with a property of forming a complex compound with a dissolved dye, thereby exhibiting the dye transfer-inhibiting effect during washing.

Preferred examples of the above-mentioned vinyl lactam unit-containing polymer (hereinafter, also referred to as a vinyl lactam polymer) include a homopolymer obtained by singly polymerizing a monomer such as N-vinylpyrrolidone and N-vinylcaprolactam or a copolymer obtained by copolymerizing these monomers as an essential component and, if necessary, another monomer. Only one or two or more species of the above-mentioned vinyl lactam unit-containing polymer maybe used in combination.

Polyvinylpyrrolidone and polyvinylcaprolactam are preferable and polyvinylpyrrolidone is particularly preferable as the above-mentioned homopolymer, for example.

In the above-mentioned copolymer, a monomer component that is copolymerized with N-vinylpyrrolidone or N-vinylcaprolactam is not especially limited as long as it is copolymerizable with a monomer component that is to have a vinyl lactam unit. Examples thereof include: (1) (meth) acrylic acid esters such as methyl (meth)acrylate, ethyl (meth)

acrylate, butyl (meth)acrylate, and (meth)acrylate-2-hydroxyethyl; (2) (meth)acrylamide derivatives such as (meth)acrylamide, N-monoethyl (meth)acrylamide, N,N'-dimethyl (meth)acrylamide, 2-acrylamide-2-methylpropanesulfonate, and N-isopropyl acrylamide; (3) basic unsaturated monomers such as dimethylaminoethyl (meth)acrylate, dimethylaminoethyl (meth)acrylamide, 2-vinylpyridine, 4-vinylpyridine, and 1-vinylimidazole and quaternarized products thereof; (4) amine-N-oxide group-containing unsaturated monomers such as vinylpyridine-N-oxide; (5) vinylamides such as vinylformamide, vinylacetamide, and vinyloxazolidone; (6) carboxyl group-containing unsaturated monomers such as (meth) acrylic acid, itaconic acid, maleic acid, and fumaric acid; (7) unsaturated acid anhydrides such as maleic anhydride and itaconic anhydride; (8) vinyl esters such as vinyl propionate and vinyl acetate; (9) oxazoline group-containing monomers such as 2-isopropenyl-2-oxazoline; (10) vinylethylene carbonate and derivatives thereof; (11) styrene and derivatives thereof; (12) vinyl sulfonic acid and derivatives thereof; (13) vinyl ethers such as ethyl vinyl ether; (14) olefines such as ethylene, propylene, and butadiene. One or two or more species of them may be used. Among these, the monomers (1) to (9) are more preferred in view of polymerizability. The monomers (3) and (4) are still more preferred because the monomers strongly interact with a dye. Among these, 2-vinylpyridine, 4-vinylpyridine, 1-vinylimidazole and quaternarized products thereof, and vinylpyridine-N-oxide are most preferred.

A polymerization initiator used for producing the above-mentioned vinyl lactam polymer is not especially limited. Azo initiators such as 2,2-azoisobutylnitrile, dimethyl-2,2'-azobis (2-methylpropionate); organic peroxides such as t-butyl hydroperoxide, t-butyl peroxypivalate, t-butyl peroxy-2-ethylhexanoate, and benzoyl peroxide; persulfates such as sodium persulfate, potassium persulfate, and ammonium persulfate; and hydrogen peroxide may be used. If necessary, a reducing agent such as ammonium sulfite and sodium sulfite may be used in combination with the above-mentioned initiator (for example, t-butyl hydroperoxide and pottasium persulfate). In this case, sulfites and the like, used as a reducing agent, can function also as the acid group-containing chain transfer agent. It is preferable that as the above-mentioned polymerization initiator, an organic peroxide and a sulfite, or a persulfate and a sulfite are used in combination, respectively. As a result, the obtained vinyl lactam polymer exhibits an excellent dye transfer-inhibiting effect in the presence of a surfactant and during washing, it can effectively prevent a dyed fabric from losing color.

The vinyl lactam polymer of the present invention has a K value less than 28. More preferred is a K value less than 25, and even more preferred a K value less than 22, and still more preferred is a K value of 18 or less. If a dye transfer inhibitor including such a polymer is used, the inhibitor can exhibit the dye transfer-inhibiting effect during washing. Particularly in the presence of an anionic surfactant, the inhibitor can exhibit an excellent dye transfer-inhibiting effect. If the vinyl lactam polymer has a K value of more than 28, the inhibitor might not exhibit an excellent dye transfer-inhibiting effect in the presence of an anionic surfactant. The lower limit of the K value is preferably 10 or more and more preferred 12. If the K value is less than 10, the interaction between the vinyl lactam polymer and the dye is reduced and thereby the inhibitor might not exhibit an excellent dye transfer-inhibiting effect.

Accordingly, the present patent claims a dye transfer inhibitor and a vinyl lactam homopolymer and a vinyl lactam copolymer, each containing 90 % by weight or more of vinyl lactam units, and each comprising a K value of from 12 to 18.

The K value is an index of a molecular weight of a polymer, and it can be measured as follows, for example.

"Measurement method of K value"

A polymer is dissolved in water to prepare a 1% by weight aqueous solution of the polymer. The aqueous solution is measured for viscosity at 25°C with a capillary viscosimeter. The measurement value is applied to the following Fikentscher formula to calculate the K value:

$$(\log \eta_{rel})/C = [(75Ko^2)/ (1+1.5KoC)] + Ko$$

K = 1000Ko (C represents the number of grams of the polymer in 100 mL of the solution. $\eta$rel represents the viscosity of the solution to the solvent. The higher the obtained value is, the higher the molecular weight is.

The above-mentioned vinyl lactam units contained in the polymer account for 90% by weight or more in 100% by weight of the entire monomer component constituting the polymer. As a result, the operation and effects of the vinyl lactam units-containing polymer which has a high ability of dispersing a dye can be sufficiently exhibited, and thereby the inhibitor can exhibit a high dye transfer-inhibiting effect. If the above-mentioned vinyl lactam units contained in the polymer account for less than 90% by weight, the inhibitor insufficiently exhibits the dye transfer-inhibiting effect, which might make it impossible to enhance the utility any more in view of the application. The above-mentioned vinyl lactam units contained in the polymer more preferred account for 95% by weight or more, and particularly preferred for 97% by weight or more, and still more preferred for 99% by weight or more, and most preferred for 100% by weight.

The dye transfer inhibitor of the present invention includes an acid group-containing chain transfer agent. If the polymerization proceeds through a radical polymerization, the chain transfer agent has an effect of accelerating a chain transfer reaction from a propagating radical (polymer) and reducing a polymerization degree. The above-mentioned acid group-containing chain transfer agent has at least one acid group in the molecule. Examples of the above-mentioned acid group-containing chain transfer agent include (1) carboxyl group-containing mercapto compounds such as mercaptoacetic acid, 3-mercaptopropionic acid, and mercaptosuccinic acid, and salts thereof; (2) sulfonic acid group-containing mercapto compounds such as mercapto-1-propanesulfonic acid and salts thereof; (3) reducing inorganic acids such as sulfurous acid, thiosulfuric acid, and phosphinic acid, and salts thereof; (4) reducing organic acids such as ascorbic acid, formic acid, and oxalic acid, and salts thereof. One or two or more species of them may be used. Among these chain transfer agents, one or two or more species of the compounds (1) to (3) are preferably used. 3-mercaptopropionate and sulfite are more preferred and sulfate is still more preferred.

The dye transfer inhibitor including the above-mentioned acid group-containing chain transfer agent also can be obtained by hydrolyzing a mercapto compound including an ester group and a mercapto group, such as ethyl mercaptoacetate and 2-ethylhexyl 3-mercaptopropionate, after used for the polymerization.

The dye transfer inhibitor of the present invention includes the above-mentioned acid group-containing chain transfer agent, thereby enabling to exhibit a high dye transfer-inhibiting effect during washing. Particularly in the presence of an anionic surfactant, the inhibitor can exhibit the dye transfer-inhibiting effect.

In the present invention, examples of the embodiment in which the dye transfer inhibitor includes the acid group-containing chain transfer agent include embodiments (1) in which the polymerization for forming a vinyl lactam polymer is performed in the presence of the chain transfer agent, and thereby the dye transfer inhibitor includes the chain transfer agent; (2) in which the vinyl lactam polymer is added to the polymer which is to form a vinyl lactam polymer, and thereby the dye transfer inhibitor includes the chain transfer agent; (3) in which the dye transfer inhibitor includes the chain transfer inhibitor in combination of (1) with (2). In the present invention, the embodiment (1) in which the polymerization for forming a vinyl lactam polymer is performed in the presence of the chain transfer agent, and thereby the dye transfer inhibitor includes the chain transfer agent is particularly preferred. As a result, the acid group can be bonded to the polymer end. Therefore, it can be possible to prevent the polymer from aggregating to be deactivated due to the interaction with an anionic surfactant, in the presence of the anionic surfactant, which is widely used in soap, a powder detergent and the like, and simultaneously, the interaction between the polymer and the dye is enhanced, and thereby the inhibitor can exhibit the dye transfer-inhibiting effect.

The content of the above-mentioned chain transfer agent is preferably 0.1 to 15% by weight relative to the monomer. If the content is less than 0.1% by weight, it might be impossible to sufficiently suppress the polymer and the anionic surfactant from aggregating. If the content is more than 15% by weight, the interaction between the polymer and the dye might be reduced. The content of the chain transfer agent is more preferred 0.5 to 10% by weight and still more preferred is 1 to 8% by weight.

According to the above-mentioned embodiment (1) in which the polymerization is performed in the presence of the chain transfer agent, and thereby the dye transfer inhibitor includes the chain transfer agent, the used amount of the chain transfer agent preferably accounts for 0.1 to 15% by weight relative to the monomer. If the used amount thereof accounts for less than 0.1% by weight, it might be impossible to suppress the polymer and the anionic surfactant from aggregating, and also in the presence of the anionic surfactant, the inhibitor might not exhibit an excellent dye transfer-inhibiting effect. If the used amount thereof is more than 15% by weight, the interaction between the polymer with the dye might be reduced. The used amount thereof more preferred accounts for 0.5 to 10% by weight and still more preferred accounts for 1 to 8% by weight.

In the above-mentioned polymerization step, the polymerization reaction is not especially limited. The polymerization may be performed in accordance with an ordinary polymerization method such as solution polymerization, emulsion polymerization, suspension polymerization, and precipitation polymerization. Among these, it is preferred that the polymerization is performed in accordance with solution polymerization.

In the above-mentioned polymerization, a solvent may be used. The solvent is not especially limited as long as a polymer is dissolved therein. Examples of the solvent include water, alcohols, ethers, ketones, esters, amides, sulfoxides, hydrocarbons. These may be used singly or in combination of two or more species thereof. Among these, water and alcohols are more preferred and water is particularly preferred.

It is preferable that the dye transfer inhibitor of the present invention has a dye transfer ratio of 28% or less. As a result, the dye transfer inhibitor can exhibit an excellent dye transfer-inhibiting effect also in the presence of an anionic surfactant, which is widely used in a laundry detergent. If the dye transfer ratio is more than 28%, the dye transfer-inhibiting effect might not be sufficiently exhibited. The dye transfer ratio is more preferred 25% or less and still more preferred 23% or less.

The dye transfer ratio is an index of the dye transfer-inhibiting effect during a washing process, and it can be determined as follows.

"Measurement method of dye transfer ratio"

(1)A cotton fabric in 8 cm x 8 cm (product of Testfabrics, Inc., Style#423Bleached, Mercerized Cotton Twill) is measured for L, a, and b values with a color difference meter (product of Nippon Denshoku Industries Co., Ltd., NR-3000) (The values are defined as $L_c$, $a_o$, and $b_o$, respectively).

(2) ATerg-O-Tometer is set at 25°C, andhardwater 800 g, prepared by dissolving calcium chloride dihydrate 4.8 g into ion exchanged water 15 kg, a 1% by weight aqueous solution of straight chain sodium alkylbenzene sulfonate 30.8 g, a 1% by weight aqueous solution of sodium carbonate 67.7 g, zeolite 1.23 g, a 0.35% by weight aqueous solution of a sample polymer 25.1 g, a 0.1% aqueous solution of a dye (DirectBlure71) 8.8 g are charged into a pot, and the mixture is stirred at 75rpm for one minute.

(3) Then, one cotton fabric is put in the pot and stirring is performed at 75 rpm for 30 minutes.

(4) The cotton fabric is taken with tweezers and washed with ion exchange water 3 kg, and then dried at 80°C for 30 minutes using a hot air dryer.

(5) The obtained cotton fabric is measured for L, a, b values with the color difference meter (the obtained L, a, b values are defined as $L_1$, $a_1$, and $b_1$, respectively).

(6) Based on the L, a, b values measured in (1) and (5) of the cotton fabric, a $\Delta E$ value is calculated from the following formula in accordance with JIS 8730.

$$\Delta E = \ [\ (L_1 - L_0)^2 + (a_1 - a_0)^2 + (b_1 - b_0)^2\ ]^{1/2}$$

(7) A measurement is performed in the same manner as in the above-mentioned (1) to (6) except that the polymer is not used and a $\Delta E$ value is measured.

(8) Based on these values obtained in the above-mentioned manner, a dye transfer ratio is determined from the following formula: Dye transfer ratio (%)=($\Delta E$ value in the measurement in which the polymer is added) /($\Delta E$ value in the measurement in which the polymer is not added) x 100. The higher the obtained value is, the higher the dye transfer-inhibiting effect is.

The laundry detergent composition of the present invention includes the above-mentioned dye transfer inhibitor. The laundry detergent composition can effectively prevent a dye from transferring into other fibers and exhibit high detergency because the N-vinyl cyclic lactam structure of the above-mentioned dye transfer inhibitor forms a complex compound with the dye which elutes into water from a fiber during washing to be absorbed to and disperse the dye. Examples of an application of the above-mentioned laundry detergent composition include powder detergents, liquid detergents, and softening agents.

The content ratio of the dye transfer inhibitor in the present invention relative to a solid content 100% by weight of the above-mentioned laundry detergent composition is preferably 0.01 to 10% by weight and is more preferred 0.05 to 5% by weight.

It is preferable that the above-mentioned laundry detergent composition contains a surfactant in addition to the above-mentioned dye transfer inhibitor. Examples of such a surfactant include anionic surfactants, nonionic surfactants, cationic surfactants, and amphoteric surfactants. One or two or more species of them may be used.

Examples of the above-mentioned anionic surfactants include alkylbenzene sulfonates, alkyl or alkenyl ethersulfates, alkyl or alkenyl sulfates, $\alpha$-olefin sulfonates, $\alpha$-sulfofatty acids or ester salts thereof, alkane sulfonates, saturated or unsaturated fatty acid salts,alkyl or alkenyl ether carboxylates, amino acid surfactants; N-acylamino acid surfactants, and alkyl or alkenyl phosphate or salts thereof. The alkyl group or the alkenyl group of such anionic surfactants may have a branched structure of the alkyl group such as a methyl group.

Examples of the above-mentioned nonionic surfactants include polyoxyalkylene alkyl or alkenyl ethers, polyoxyethylene alkyl phenyl ethers, higher fatty acid alkanol amides or alkylene oxide adducts thereof, sucrose fatty acid esters, alkyl glycoxides, fatty acid glycerin monoesters, and alkylamine oxides. The alkyl group or the alkenyl group of such nonionic surfactants may have a branched structure of the alkyl group such as a methyl group.

Quarternary ammonium salts and the like may be mentioned as the above-mentioned cationic surfactants.

Carboxyl or sulfobetaine amphoteric surfactants may be mentioned as the above-mentioned amphoteric surfactants.

The content ratio of the surfactant in 100% by weight of the above-mentioned laundry detergent composition is preferably 1 to 70% by weight. If the content ratio thereof is less than 1% by weight, the composition might insufficiently exhibit detergent performances. If the content ratio thereof is more than 60% by weight, the inhibitor might not be excellent in economic efficiency. The content ratio thereof is more preferred 15 to 60% by weight.

In addition, it is preferable that the above-mentioned laundry detergent composition includes a detergent builder. The content ratio of the detergent builder in this case is preferably 0.1 to 60% by weight in 100% by weight of the laundry detergent composition, for example. More preferred the content ratio is 1 to 10% by weight if the laundry detergent composition of the present invention is supplied in liquid state, and the content ratio is 1 to 50% by weight if it is supplied in powder state.

A selection of the above-mentioned detergent builder is not especially limited. Examples of the detergent builder include organic builders such as various alkali metal salts, ammonium salts, substituted ammonium polyacetates, carboxylates, polycarboxylates, and polyhydroxy sulfonates; inorganic builders such as silicates, aluminosilicates, borates, and carbonates. One or two or more species of them may be used.

Examples of polyacetates or polycarboxylates in the above-mentioned organic builders include a sodium salt, a potassium salt, an ammonium salt, and a substituted ammonium salt of ethylenediaminetetraacetic acid, nitrilotriaceticacid, oxydisuccinic acid, mellitic acid, glycolic acid, benzene polycarboxylic acid and citric acid.

Preferred examples of the above-mentioned inorganic builders include aluminosilicates such as a sodium salt, a pottasim salt, and a zeolite of carbonic acid, bicarbonic acid, and silicic acids.

The above-mentioned laundry detergent composition may further contain a conventionally used additive such as a fluorescent whitening agent, a foaming agent, a foam inhibitor, an anticorrosive, an antirust, a soil suspension, a soil release agent, a pH adjustor, a fungicide, a chelating agent, a viscosity modifier, an enzyme, an enzyme stabilizer, a perfume, a fiber softener, a peroxide, aperoxidestabilizer, a fluorescence agent, a coloring agent, a foaming agent, a foam stabilizer, a lustering agent, a bleaching agent, an enzyme, and a dye, or a solvent. One or two or more species of them may be contained. The content thereof may be appropriately determined depending on needed performance and the like.

The present invention includes a vinyl lactam homopolymer having a K value of from 12 to 18, wherein the vinyl lactam homopolymer, contains sulfur derived from a sulfite, a content of said sulfur derived from a sulfite in the homopolymer is 0.1 to 2.0% by weight, and an ammonia content in the homopolymer is 0.3% by weight or less.

The vinyl lactam homopolymer in the present invention is obtained by polymerization using a sulfite. Therefore, the vinyl lactam homopolymer contains a sulfite in some cases and therefore it contains sulfur derived from the sulfite. The sulfur content in the vinyl lactam homopolymer of the present invention is 0.1 to 2.0% by weight. If the sulfur content is less than 0.1% by weight, an amount of the sulfonic acid introduced into the polymer is small. Therefore, the dye transfer-inhibiting effect might become insufficient. If the sulfur content is more than 2.0% by weight, the amount of the introduced sulfonic acid is too large. Therefore, the characteristics of the vinyl lactam homopolymer might be deteriorated, leading to a reduction in the dye transfer-inhibiting effect. The sulfur content is preferably 0.2 to 15% by weight and is more preferred 0.3 to 1.0% by weight.

The above-mentioned vinyl lactam homopolymer is preferably polyvinylpyrrolidone.

The above-mentioned sulfur content is measured by the following method.

"Measurement method of sulfur content"

A polymer solution 20 g, obtained by polymerization, is charged into a dialysis membrane with a length of 40 cm (product of SPECTRUM LABORATORIES INC., Spectra/Por Membrane MWCO: 1000 cutoff molecular weight 1000) and the membrane is closed. This membrane is put into water 2000 g in a 2L-beaker and stirring is performed with a stirrer. After 12 hours, the water in the beaker is replaced with new water and stirring is further performed for 12 hours. This operation is repeated twice. Then, the dialysis membrane is taken out of the beaker and the membrane external surface is washed well with water. Then, the content is taken out of the membrane. The dialysate is measured for sulfur amount by an inductively coupled plasma (ICP) emission spectrochemical analysis, and the sulfur amount in the polymer is quantitated from a solid content of the dialysate. The introduction of the sulfonic acid group into the polymer can be also identified by subjecting a dried substance of the above-mentioned dialysate by an infrared spectroscopy (IR) method, thereby checking absorption at near 1040 cm$^{-1}$.

Examples of the sulfite include ammonium sulfite, ammonium hydrogensulfite sodium hydrogen sulfite, sodium sulfite, and sodium hydrogen sulfite. One or two or more species of them may be used. Sodium sulfite and sodium hydrogen sulfite are preferred.

If ammonium sulfite is used as the above-mentioned sulfite, the vinyl lactam homopolymer contains ammonia in some cases. In such a case, the ammonia can be reduced by performing distillation, an ion-exchange treatment, and the like, after the polymerization.

The ammonia content in the vinyl lactam homopolymer of the present invention is 0.3% by weight or less. If the ammonia content is more than 0.3% by weight, an ammonia odor might be noticed. The ammonia content is preferably 0.2% by weight or less. More preferred, the ammonia content is 0.1% by weight or less. Most preferred, the vinyl lactam homopolymer contains no ammonia.

The above-mentioned ammonia content can be measured by ion chromatography.

The K value of the above-mentioned vinyl lactam homopolymer is within the above-mentioned range.

A 10% aqueous solution of the above-mentioned vinyl lactam homopolymer preferably has a pH of 4 or more, more preferred 5 or more, and most preferred 6 or more. If the pH is less than 4, an odor problem might occur because a residual sulfite generates sulfurous acid gas.

The vinyl lactam homopolymer of the present invention can reduce the ammonia odor, and therefore it can be preferably used in detergents or cosmetics such as hair gel.

The vinyl lactam polymer of the present invention is obtained by polymerization using a sulfite. Attributed to the sulfonic acid group introduced into the polymer, the homopolymer can exhibit an excellent dye transfer-inhibiting effect without reducing the performances due to the interaction with an anionic surfactant during washing. Further, the polymer has a reduced ammonia amount, and therefore an ammonia odor problem can be prevented even if the homopolymer is added to a detergent and the like, as a dye transfer inhibitor.

The present invention is also a method for producing a vinyl lactam polymer having a K value of less than 28, wherein polymerization is performed in an aqueous solution with a pH of 5 to 10 using hydroperoxide and an alkali metal sulfite.

Examples of the above-mentioned hydroperoxide include t-butyl hydroperoxide, t-cumyl hydroperoxide, 1,1,3,3-tetramethylbutyl hydroperoxide. Preferably, the hydroperoxide is t-butyl hydroperoxide.

The used amount of the above-mentioned hydroperoxide is preferably 0.01 to 5% by weight and more preferred is 0.05 to 3% by weight relative to the monomer component. The used amount thereof is more preferred 0.1 to 2% by weight.

Examples of the above-mentioned alkali metal sulfite include sodium sulfite, sodium hydrogen sulfite, and potassium sulfite. One or two species of them may be used. It is preferred that the alkali metal sulfite is used in an aqueous solution form.

The used amount of the above-mentioned alkali metal sulfite is preferably 0.01 to 20% by weight relative to the monomer component. The use amount thereof is more preferred 0.1 to 15% by weight and is most preferred 0.5 to 10% by weight.

It is important to perform the polymerization while the polymer solution is controlled to have a pH of 5 to 10 according to the production method of the vinyl lactam polymer solution in the present invention. If the polymer solution has a pH of less than 5, N-vinylpyrrolidone is decomposed, and a large amount of 2-pyrrolidone tends to be generated. If the polymer solution has a pH of more than 10, an initiator efficiency is reduced and thereby a residual N-vinylpyrrolidone amount is increased. As a result, the molecular weight of the polymer solution is increased. In order to control the pH of the polymer solution, alkaline sodium sulfite and acidic sodium hydrogen sulfite can be used together in an aqueous solution form, or sodium hydrogen sulfite which is neutralized with sodium hydroxide and the like can be used in an aqueous solution form, as the alkali metal sulfite. The pH of the polymer solution is more preferred 6 to 9 and is still more preferred 7 to 9.

The K value of the vinyl lactampolymer is within the above-mentioned range.

The compounds exemplified above as the vinyl lactampolymer may be mentioned as the above-mentioned vinyl lactam polymer. Polyvinylpyrrolidone is preferable. If the above-mentioned vinyl lactam polymer is a copolymer obtained by copolymerizing a monomer such as N-vinylpyrrolidone and N-vinylcaprolactam as an essential component, and if necessary, another monomer, it is preferred that the another monomer accounts for 70% by weight or less relative to the entire monomer. More preferred, the another monomer accounts for 50% by weight or less, and still more preferred accounts for 30% by weight or less, and most preferred accounts for 10% by weight or less.

It is preferred that water is singly used as the above-mentioned aqueous solvent. In addition to water, an organic solvent may be appropriately contained. Examples of the organic solvent that may be contained together with water include alcohols such as methyl alcohol, ethyl alcohol, isopropyl alcohol, ethylene glycol, propylene glycol, 1, 3-butanediol, and 1, 4-butanediol; ethers such as glycol ether, diethylene glycol, triethylene glycol, hexamethylene glycol, and polyethylene glycol; and amines such as 2-aminoethanol, diethanolamine, and triethanolamine. Only one or two or more species of these organic solvents may be used. If the aqueous solvent also includes these organic solvents, it is preferred that the content of the organic solvents is 30% by weight or less in the solvent.

According to the production method of the present invention, a vinyl lactam polymer containing no odor components such as ammonia can be produced. In addition, hydroperoxide and alkali metal sulfite are used, which permits a high polymerization rate. The vinyl lactam polymer produced by the production method of the present invention can exhibit an excellent dye transfer-inhibiting effect because the sulfonic acid group introduced into the polymer suppresses the interaction with an anionic surfactant from deteriorating the performances during washing. Further, even if the vinyl lactam polymer is contained in a detergent and the like as a dye transfer inhibitor, an odor problem caused by ammonia and the like can be prevented because the polymer contains no odor components such as ammonia.

Examples of an application of the vinyl lactam polymer produced by the production method according to the present invention include a dye transfer inhibitor, a dispersant for various inorganic or organic substances, a thickener, a cohesive, an adhesive, a surface-coating agent, and a crosslinking composition. Specific examples thereof include a mud dispersant, a cement material dispersant, a cement material thickener, a detergent builder, a heavy metal scavenger, a metal surface treatment, a dyeing assistant, a dye fixing agent, a foam stabilizer, an emulsion stabilizer, an ink dye dispersant, a water-based ink stabilizer, a pigment dispersant for coating materials, a thickener for coating materials, a pressure sensitive adhesive, a paper adhesive, a stick paste, an adhesive for medical use, a cohesive for patches, a cohesive for face packs, a filler dispersant for resins, a coating agent for recording papers, a surface treatment agent for ink jet papers, a dispersant for photosensitive resins, an antistatic agent, a moisturizer, a raw material for water-absorbing resins, a binder for fertilizers, a polymer crosslinking agent, a resin compatibilizer, a photographic additive, a cosmetic dispensing additive, a hairdressing assistant, a hair spray additive, and a sunscreen composition additive. Among these, a dye transfer inhibitor is particularly preferred.

The present invention includes a method for producing a vinyl lactam polymer, including a step of performing polymerization using a persulfate, a sulfite, and a heavy metal compound.

Details are given below.

It is preferred in the method for producing a vinyl lactam polymer according to the present invention that a persulfate, a sulfite, and a heavy metal compound as a redox polymerization initiator are added to an aqueous solvent solution including a monomer component essentially containing N-vinylpyrrolidone to perform the polymerization.

It is preferred that the above-mentioned sulfite, persulfate, and heavymetal compound are used as a polymerization initiator in the production method of the present invention.

Examples of the above-mentioned sulfite include sodium sulfite, potassium sulfite, ammonium sulfite, and sodium hydrogen sulfite. Sodium sulfite and sodium hydrogen sulfite are preferred.

Examples of the above-mentionedpersulfate include sodium persulfate, potassium persulfate, and ammonium persulfate. The persulfate is preferably ammonium persulfate.

Examples of the above-mentioned heavy metal compound include copper(II)sulfate, iron(II)sulftae, copper(II)-chloride, iron(III)sulfate n-hydrate, copper(II)acetate, iron(III)chloride. One or two or more species of them may be used.

It is preferred that water is singly used as the above-mentioned aqueous solvent. The aqueous solvent may appropriately contain an organic solvent, in addition to water. Examples of the organic solvent that may be contained together with water include alcohols such as methyl alcohol, ethyl alcohol, isopropyl alcohol, ethylene glycol, propylene glycol, 1,3-butanediol, and 1, 4-butanediol, ethers such as glycol ether, diethylene glycol,triethylene glycol, hexamethylene glycol, and polyethylene glycol; and amines such as 2-aminoethanol, diethanolamine, and triethanolamine. Only one or two or more species of these organic solvents may be used. If the aqueous solvent also contains these organic solvents, it is preferable that the content of the organic solvents is 30% by weight or less in the solvent.

In the present invention, it is preferred that each of the monomer component, the persulfate, and the sulfite is sequentially added.

Specifically, the sequential addition may be a continuous addition (for example, an embodiment in which dropwise addition is performed for a specific time), an intermittent addition (for example, an embodiment in which each raw material (the monomer component, the persulfate, the sulfite, and the heavy metal compound) is added in some portions), or a combination of the continuous addition with the intermittent addition. It is preferred that the monomer component, the persulfate, and the sulfite are each independently added sequentially.

The heavy metal compound may be added to a polymerization container before initiating the polymerization or may be sequentially added in an aqueous solution form. Alternatively, the heavy metal compound may be mixed with the monomer to be sequentially added.

With respect to the used amount of the above-mentioned heavy metal compound, it is preferred that heavy metal ions are 10 to 1000 ppb relative to the monomer component. If the heavy metal ions are less than 10 ppb, it night take a long time to complete the polymerization, or an impurity content in the polymer might be insufficiently reduced, for example. If the heavy metal ions are more than 1000 ppb, the vinyl lactam polymer obtained by the production method of the present invention might be colored. The heavy metal ions are more preferred 50 to 700 ppb and are still more preferred 100 to 500 ppb.

The used amount of the above-mentioned persulfate is preferably 0.1 to 5% by weight relative to the monomer component. If the used amount thereof is less than 0.1% by weight, the monomer component might be insufficiently reduced. If the used amount thereof is more than 5% by weight, a residual persulfate might deteriorate a storage stability of the polymer. The used amount thereof is more preferred 0.5 to 3% by weight.

The used amount of the above-mentioned sulfite is preferably 0.1 to 15% by weight relative to the monomer component. If the used amount thereof is less than 0.1% by weight, a residual monomer might be insufficiently reduced. If the used amount thereof is more than 15% by weight, turbidity might be generated if an obtained polymer is used in an application in which an organic solvent and the like is used. The used amount thereof is more preferred 0.1 to 10% by weight and is still more preferred 0.5 to 8% by weight.

It is important to perform the polymerization while the polymer solution is controlled to have a pH of 5 to 11 in the production method of the vinyl lactam polymer solution according to the present invention. If the polymer solution has a pH of less than 5, N-vinylpyrrolidone is decomposed, and a large amount of 2-pyrrolidone tends to be generated. If the polymer solution has a pH of more than 11, an initiator efficiency is reduced and thereby a residual N-vinylpyrrolidone amount is increased, and the molecular weight of the polymer solution is increased. The pH is more preferred 6 to 10 and is still more preferred 7 to 9. In order to control the pH of the polymer solution, alkaline sodium sulfite and acidic sodium hydrogen sulfite can be used together in an aqueous solution, or sodium hydrogen sulfite which is neutralized with sodium hydroxide and the like in an aqueous solution can be used as the alkali metal sulfite.

The molar ratio of the above-mentioned sulfite to the persulfate is 1 to (0.01to 2). If the molar ratio of the persulfate is larger than 2, the polymer might be colored. If the molar ratio of the persulfate is smaller than 0.01, a residual monomer might be insufficiently reduced. The molar ratio of the persulfate is more prefered 0.05 to 1.5, and is still more preferred 0.1 to 1.

It is preferred that ammonia is used in the production method of the vinyl lactam polymer in the present invention.

With respect to the use amount of the above-mentioned ammonia, it is preferred that ammonia accounts for 0.01 to 5% by weight relative to the monomer component. If the ammonia accounts for less than 0.01% by weight, a residual monomer (N-vinylpyrrolidone) might be insufficiently reduced. If the ammonia accounts for more than 5% by weight, the ammonia might be insufficiently reduced even in a post-treatment such as distillation and ion exchange, mentioned below. More preferred, the ammonia accounts for 0.03 to 1% by weight and still more preferred accounts for 0.05 to 0.3% by weight. It is preferred that the ammonia is used as an ammonium salt of the above-mentioned persulfate, sulfite, andheavymetal compound. If a large amount of ammonia is used within the above-mentioned range, the ammonia can be reduced by performing distillation, an ion exchange treatment, and the like after the polymerization.

The compounds and the like exemplified above in the vinyl lactam polymer may be mentioned as the above-mentioned vinyl lactam polymer. If the above-mentioned vinyl lactam polymer is a copolymer obtained by copolymerizing a monomer such as N-vinylpyrrolidone and N-vinylcaprolactam as an essential component, and if necessary another monomer, it is preferred that the another monomer accounts for 70% by weight or less relative to the entire monomer. More preferred, the another monomer accounts for 50% by weight or less, and still more preferred accounts for 30% by weight or less, and most preferred accounts for 10% by weight or less. The K value of the above-mentioned vinyl lactam polymer is within the above-mentioned range.

According to the production method of the present invention, a vinyl lactam polymer solution in which an impurity content is reduced and transparency is high can be safely produced in a shorter polymerization time in comparison to a production method using a conventional polymerization initiator. The vinyl lactam polymer obtained by the production method of the present invention can be preferably used as cosmetics such as a hair gel, or a dye transfer inhibitor. The vinyl lactampolymer produced by the production method of the present invention can exhibit an excellent dye transfer-inhibiting effect because the sulfonic acid introduced into the polymer suppresses the interaction with an anionic surfactant from deteriorating the performances during washing. If the vinyl lactam polymer produced by the production method of the present invention is used as a dye transfer inhibitor, a color-fading ratio of a dyed fabric can be decreased, for example, in comparison to the case where another polymer having a dye transfer-inhibiting effect is used as a dye transfer inhibitor.

The above-mentioned color-fading ratio can be measured by the following method.

"Measurement method of color-fading ratio of dyed fabric"

(1) Three cotton dyed fabrics in 4 cm x 4 cm (product of Test fabrics, Inc. Style#STC EMPA133 Cotton dyed with Direct Blue 71) are measured for L, a, b values with a color difference meter (product of Nippon Denshoku Industries Co., Ltd., NR-3000) (The values are defined as $L_0$, $a_0$, and $b_0$, respectively).

(2) A Terg-O-Tometer is set at 40°C, and hard water 756 g, prepared by dissolving calcium chloride dihydrate 5.25 g into ion exchange water 15 kg, a 1% by weight aqueous solution of straight chain sodium alkylbenzene sulfonate 63.0 g, a 1% by weight aqueous solution of sodium carbonate 138.6 g, zeolite 2.52 g, and a 0.35% by weight aqueous solution of a sample polymer 9.15 g are charged into a pot, and the mixture is stirred at 75rpm for one minute.

(3) Then, the three cotton dyed fabrics are put in the pot and stirring is performed at 75 rpm for 30 minutes.

(4) The three cotton dyed fabrics are taken with tweezers and washed with ion exchanged water 3 kg, and then dried at 80°C for 30 minutes using a hot air dryer.

(5) The obtained three dyed cotton fabrics are measured for L, a, b values with a color difference meter (the obtained L, a, b values are defined as $L_1$, $a_1$, and $b_1$, respectively).

(6) Based on the L, a, b values of the three dyed cotton fabrics measured in (1) and (5), $\Delta E$ values are calculated from the following formula, in accordance with JIS8730. Thereby, an averaged $\Delta E$ value of the three cotton dyed fabrics is calculated.

$$[ (L_1 - L_0)^2 + (a_1 - a_0)^2 + (b_1 - b_0)^2 ]^{1/2}$$

(7) A measurement is performed in the same manner as in the above-mentioned (1) to (6) except that the polymer is not used and an averaged ΔE value is measured.

(8) Based on the ΔE obtained in the above-mentioned manner, a color-fading ratio is determined from the following formula: Color-fading ratio (%)=(Averaged ΔE value in the measurement in which the polymer is added)-(Averaged ΔE value in the measurement in which the polymer is not added) / (Averaged ΔE value in the measurement in which the polymer is not added) x 100. The smaller the obtained value is, the smaller the color-fading degree is.

The present invention includes further a vinyl lactam copolymer having a K valve of from 12 to 18 wherein the vinyl lactam copolymer contains sulfur derived from a sulfite and a content of said sulfur derived from a sulfite in the copolymer is 0.1 to 2.0% by weight.

The vinyl lactam copolymer of the present invention is obtained by polymerization using a sulfite. Therefore, the vinyl lactam polymer contains a sulfite in some cases and therefore it contains sulfur derived from the sulfite. The sulfur content in the vinyl lactam copolymer of the present invention is 0.1 to 2.0% by weight. If the sulfur content is less than 0.1% by weight, an amount of the sulfonic acid introduced into the polymer is small. Therefore, the dye transfer-inhibiting effect might become insufficient. If the sulfur content is more than 2.0% by weight, the amount of the introduced sulfonic acid is too large. Therefore, the characteristics of the vinyl lactam copolymer might be deteriorated, leading to a reduction in the dye transfer-inhibiting effect. The sulfur content is preferably 0.2 to 1.5% by weight and is more preferred 0.3 to 1.0% by weight.

N-vinylpyrrolidone is preferable as a vinyl lactammonomer that forms the above-mentioned vinyl lactam copolymer. Examples of another monomer that is copolymerized with the N-vinyl lactam monomer include (1) (meth)acrylic acid esters such as methyl (meth) acrylate, ethyl (meth) acrylate, butyl (meth)acrylate, and (meth)acrylate-2-hydroxyethyl; (2) (meth)acrylamide derivatives such as (meth)acrylamide, N-monomethyl (meth)acrylamide,N,N'-dimethyl (meth)acrylamide, 2-acrylamide-2-methylpropanesulfonic acid, and N-isopropyl acrylamide; (3) basic unsaturated monomers such as dimethylaminoethyl (meth)acrylate, dimethylaminoethyl (meth)acrylamide, 2-vinylpyridine, 4-vinylpyridine, and 1-vinylimidazole and quaternarized products thereof;(4) amine-N-oxide group-containing unsaturated monomers, for example, amine-N-oxide, such as vinylpyridine-N-oxide; (5) vinylamides such as vinylformamide, vinylacetamide, and vinyloxazolidone; (6) carboxyl group-containing unsaturated monomers such as (meth)acrylicacid, itaconic acid, maleic acid, and fumaric acid; (7) unsaturated acid anhydrides such as maleic anhydride and itaconic anhydride; (8) vinyl esters such as vinyl propionate and vinyl acetate; (9) oxazoline group-containing monomers such as 2-isopropenyl-2-oxazoline; (10) vinylethylene carbonate and derivatives thereof; (11) styrene and derivatives thereof; (12) vinyl sulfonic acid and derivatives thereof; (13) vinyl ethers such as ethyl vinyl ether; (14) olefines such as ethylene, propylene, and butadiene. One or two or more species of them may be used. Among these monomers, the compounds (1) to (9) are more preferred. The compounds (3) and (4) are still more preferred because these compounds and a dye more highly interact with each other. Among these, 2-vinylpyridine, 4-vinylpyridine, 1-vinylimidazole and quaternarized products thereof, and vinylpyridine-N-oxide are most preferred. It is preferred that the another monomer accounts for 70% by weight or less relative to the entire monomer. More preferred are the another monomer accounts for 60% by weight or less, and most preferred accounts for 50% by weight or less. The lower limit is preferably 10% by weight or more, and more preferred is 20% by weight or more.

The above-mentioned sulfur content can be measured by the above-mentioned method.

The sulfites exemplified above may be mentioned as the above-mentioned sulfites.

The vinyl lactam copolymer in the present invention has a K value of 18 or less. If a dye transfer inhibitor including such a polymer is used, the inhibitor exhibits a dye transfer-inhibiting effect during washing. Particularly in the presence of an anionic surfactant, the inhibitor exhibits an excellent dye transfer-inhibiting effect. If the vinyl lactam polymer has a K value of more than 28, the inhibitor might not exhibit an excellent dye transfer-inhibiting effect in the presence of an anionic surfactant. The lower limit of the K value is 12 or more. If the K value is less than 10, the interaction between the vinyl lactam polymer and the dye is reduced and thereby the inhibitor might not exhibit an excellent dye transfer-inhibiting effect.

It is preferred that a 30% aqueous solution of the above-mentioned vinyl lactam copolymer has a Hazen color number (APHA) in accordance with JIS-K3331 of 180 or less. The Hazen color number is more preferred 150 or less and is most preferred 120 or less. If the K value of the 30% aqueous solution exceeds the above-mentioned range, coloring might be caused when the inhibitor is contained in a detergent.

EFFECT OF THE INVENTION

The dye transfer inhibitor of the present invention has the above-mentioned configuration. The inhibitor exhibits a dye transfer-inhibiting effect in the presence of a surfactant during washing, and particularly in the presence of an anionic surfactant, it exhibits an excellent dye transfer-inhibiting effect.

BEST MODES FOR CARRYING OUT THE INVENTION

The present invention is mentioned in more detail below with reference to Examples, but it is not limited to only these Examples. The terms "part(s)" and "%" represent "part(s) by weight" and "% by weight", respectively, unless otherwise specified.

Example 1 (not covered by the claims):

A polymerization container equipped with a condenser, a nitrogen inlet line, and a thermometer, was charged with ion exchange water 148.4 parts. The inside of the polymerization container was set under nitrogen atmosphere by introducing nitrogen. The polymerization container was heated until the inside temperature reached 90°C. Then, under stirring, a monomer solution consisting of N-vinylpyrrolidone 60 parts, 3-mercaptopropionic acid 1.6 parts, 1N-sodium hydroxide 16.0 parts, and ion exchange water 44 parts and an initiator solution obtained by dissolving 2,2'-azobis(2-methylpropionamidine)dihydrochloride (product of Wako Pure Chemical Industries, Ltd., "V50") 1.2 parts in ion exchange water 28.8 parts were each added dropwise continuously for 2 hours. Then, while the mixture was kept stirring under heating for 3 hours, an initiator solution obtained by dissolving 0.24 parts of V50 in ion exchange water 5.76 parts was added in two portions to produce a polymer solution. The obtained polymer solution was measured for the K value, the dye transfer ratio, and the color-fading ratio. Table 1 shows the results.

Example 2 (not covered by the claims):

A polymerization container equipped with a condenser, a nitrogen inlet line, and a thermometer, was charged with ion exchange water 78.7 parts. The inside of the polymerization container was set under nitrogen atmosphere by introducing nitrogen. The polymerization container was heated until the inside temperature reached 98°C. Then, under stirring, a monomer solution consisting of N-vinylpyrrolidone 90 parts, mercapto-1-propanesulfonic acid 4.5 parts, 1N-sodium hydroxide 0.8 parts, and ion exchange water 90 parts and an initiator solution obtained by dissolving dimethyl 2,2'-azobis(2-methylpropionate) (product of Wako Pure Chemical Industries, Ltd., "V-601") 1.8 parts in 2-propanol 34.2 parts were each added dropwise continuously for 2 hours. Then, while the mixture was kept stirring under heating for 3 hours, an initiator solution obtained by dissolving 0.36 parts of V601 in 2-propanol 6.84 parts was added in two portions to produce a polymer solution. The obtained polymer solution was measured for the K value and the dye transfer ratio. Table 1 shows the results.

Example 3 (not covered by the claims):

A polymerization container equipped with a condenser, a nitrogen inlet line, and a thermometer, was charged with ion exchange water 78 parts. The inside of the polymerization container was set under nitrogen atmosphere by introducing nitrogen . The polymerization container was heated until the inside temperature reached 98°C. Then, under stirring, a monomer solution consisting of N-vinylpyrrolidone 46.8 parts, 30% hypophosphorous acid 5.46 parts, a 25% aqueous solution of ammonia 2.11 parts, and ion exchange water 1.2 parts, and an initiator solution obtained by dissolving 4,4'-azobis-4-cyanovaleric acid (product of NIPPOH CHEMICALS CO., LTD., N-25) 0.94 parts, and triethanolamine 0.98 parts in ion exchange water 22.6 parts were each added dropwise continuously for 1 hour. Then, while the mixture was kept stirring under heating for 1 hour, an initiator solution obtained by dissolving 0.06 parts of NC-25, ethanolamine 0.06 parts in ion exchange water 1 part was added in two portions to produce a polymer solution. The obtained polymer solution was measured for the K value and the dye transfer ratio. Table 1 shows the results.

Example 4:

A polymerization container equipped with a condenser, a nitrogen inlet line, and a thermometer, was charged with ion exchange water 225 parts. The inside of the polymerization container was set under nitrogen atmosphere by introducing nitrogen. The polymerization container was heated until the inside temperature reached 80°C. Then, under stirring, a monomer that is N-vinylpyrrolidone 90 parts, an initiator solution consisting of t-butyl hydroperoxide (product of Kayaku Akzo Co., Ltd., "Kayabutyl-H70") 1.3 parts, and ion exchange water 43.7 parts, and a 15% aqueous solution of ammonium sulfite 30 parts were each added dropwise continuously for 1 hour. Then, while the mixture was kept stirring under heating for 1.5 hours, an initiator solution consisting of 0.26 parts of Kayabutyl-H70 and ion exchange water 8.7 parts, and a 10% aqueous solution of ammonium sulfite 9.0 parts were added in two portions to produce a polymer solution. The obtained polymer solution was measured for the K value, the dye transfer ratio, and the color-fading ratio. The obtained polymer solution was also measured for the odor, the ammonia content, and the sulfur content. Tables 1 to 3 show the results.

Example 5 (not, covered by claims):

A polymerization container equipped with condenser, a nitrogen inlet line, and a thermometer, was charged with ion exchange water 149.4 parts. The inside of the polymerization container was set under nitrogen atmosphere by introducing nitrogen. The polymerization container was heated until the inside temperature reached 90°C. Then, under stirring, a monomer solution consisting of N-vinylpyrrolidone 60 parts, 3-mercaptopropionic acid 0.6 parts, 1N-sodium hydroxide 5.9 parts, and ion exchange water 54 parts and an initiator solution obtained by dissolving 2,2'-azobis(2-methylpropionamidine)dihydrochloride (product of Wako Pure Chemical Industries, Ltd., "V50") 1.2 parts in ion exchange water 28.8 parts were each added dropwise continuously for 2 hours. Then, while the mixture was kept stirring under heating for 3 hours, an initiator solution obtained by dissolving 0.24 parts of V50 in ion exchange water 5.76 parts was added in two portions to produce a polymer solution. The obtained polymer solution was measured for the K value and the dye transfer ratio. Table 1 shows the results.

Example 6 :

A polymerization container equipped with a condenser, a nitrogen inlet line, and a thermometer, was charged with ion exchange water 120 parts. The inside of the polymerization container was set under nitrogen atmosphere by introducing nitrogen. The polymerization container was heated until the inside temperature reached 30°C. Then, under stirring, a monomer solution consisting of N-vinylpyrrolidone 90 parts and a 0.016% by weight aqueous solution of copper (II) sulfate 0.28 parts; a 2% by weight aqueous solution of ammonium persulfate 36 parts; and an aqueous solution obtained by dissolving sodium sulfite 1.8 parts and sodium hydrogensulfite 1.8 parts in water 32.4 parts were each added dropwise continuously for 1 hour. Further, a 2% by weight aqueous solution of ammonium persulfate 9 parts, sodium sulfite 0.45 parts, and sodium hydrogensulfite 0.45 parts in water 8.1 parts were each added dropwise for 1 hour. Then, the mixture was kept stirring under heating for 30 minutes to produce a polymer solution. The obtained polymer solution was measured for the K value, the dye transfer ratio, and the color-fading ratio. The obtained polymer solution was also measured for the odor, the ammonia content, and the sulfur content.
Tables 1 to 4 show the results.

Example 7:

A polymerization container equipped with a condenser, a nitrogen inlet line, and a thermometer, was charged with ion exchange water 777 parts. The inside of the polymerization container was set under nitrogen atmosphere by introducing nitrogen. The polymerization container was heated until the inside temperature reached 80°C. Then, under stirring, N-vinylpyrrolidone 630 parts, a 2% by weight aqueous solution of t-butyl hydroperoxide (prepared by dissolving "Perbutyl H-69", product of Nihon Yushi Co., Ltd., in water) 236 parts, and an aqueous solution obtained by dissolving sodium sulfite 7.9 parts and sodium hydrogensulfite 23.6 parts in ion exchange water 283.5 parts were each added dropwise continuously for 3 hours. Further, a 2% by weight aqueous solution of t-butyl hydroperoxide 79 parts and an aqueous solution obtained by dissolving sodium sulfite 1.6 parts and sodium hydrogensulfite 4.7 parts in ion exchange water 56.7 parts were each added dropwise for 1 hour. Then, the mixture was kept stirring under heating for 30 minutes to produce a transparent and colorless polymer solution. The obtained polymer solution was measured for the K value and the dye transfer ratio. The obtained polymer solution was also measured for the odor, the ammonia content, and the sulfur content.
Tables 1 and 3 show the results.

Example 8:

A polymerization container equipped with a condenser, a nitrogen inlet line, and a thermometer, was charged with ion exchange water 111 parts. The inside of the polymerization container was set under nitrogen atmosphere by introducing nitrogen. The polymerization container was heated until the inside temperature reached 80°C. Then, under stirring, N-vinylpyrrolidone 90 parts and a 2% by weight aqueous solution of t-butyl hydroperoxide (prepared by dissolving "Perbutyl H-69", product of Nihon Yushi Co., Ltd., into water) 22.5 parts, and an aqueous solution obtained by dissolving sodium sulfite 2.25 parts and sodium hydrogensulfite 2.25 parts in ion exchange water 40.5 parts were each added dropwise continuously for 1 hour. Further, a 2% by weight aqueous solution of t-butyl hydroperoxide 22.5 parts and an aqueous solution obtained by dissolving sodium sulfite 0.45 parts and sodium hydrogensulfite 0.45 parts in ion exchange water 8.1 parts were each added dropwise for 1 hour. Then, the mixture was kept stirring under heating for 30 minutes to produce a transparent and colorless polymer solution. The obtained polymer solution was measured for the K value and the dye transfer ratio. The obtained polymer solution was also measured for the odor, the ammonia content, and the sulfur content.

Tables 1 and 3 show the results.

Example 9:

A polymerization container equipped with 3 condenser, a nitrogen inlet line, and a thermometer, was charged with water 99 parts and with a 0.025% by weight aqueous solution of iron (III) sulfate 1.15 parts. The inside of the polymerization container was set under nitrogen atmosphere by introducing nitrogen. The polymerization container was heated until the inside temperature reached 80°C. Then, under stirring, a monomer solution consisting of N-vinylpyrrolidone 200 parts; a 6% by weight aqueous solution of ammonium persulfate 40 parts; and an aqueous solution obtained by dissolving sodium sulfite 4.2 parts and sodium hydrogensulfite 2.2 parts in water 33.6 parts were each added dropwise continuously for 3 hours. Then, a 6% by weight aqueous solution of ammonium persulfate 10 parts and an aqueous solution obtained by dissolving sodium sulfite 1.0 part and sodium hydrogensulfite 0.56 parts in water 8.4 parts were each added dropwise for 1 hour. Successively, the mixture was kept stirring under heating for 30 minutes to produce a polymer solution.

Tables 1 and 4 show the results.

Example 10

A polymerization container equipped with a condenser, a nitrogen inlet line, and a thermometer, was charged with ion exchange water 143.1 parts. The inside of the polymerization container was set under nitrogen atmosphere by introducing nitrogen. The polymerization container was heated until the inside temperature reached 80°C. Then, under stirring, a monomer solution 1 consisting of N-vinylpyrrolidone 63 parts and N-vinylimidazole 27 parts; a 2% by weight of t-butyl hydroperoxide 21 parts, and a 10% by weight aqueous solution of ammonium sulfite 52 parts were each added dropwise continuously for 2 hours. Further, a 2% by weight of t-butyl hydroperoxide 10.5 parts and a 10% aqueous solution of ammonium sulfite 10.4 parts were each added dropwise continuously for 1 hour. Successively, the mixture was kept stirring under heating for 30 minutes to produce a polymer solution. The obtained polymer solution was measured for the K value, a dye adhesive ratio, the sulfur content.

Table 5 shows the results.

Reference Example 1:

A polymer solution was produced by performing polymerization in the same manner as in Example 6, except that sodium persulfate was used instead of ammonium persulfate.

Tables 1 and 4 show the results.

Comparative Example 1 :

A polymerization container equipped with a condenser, a nitrogen inlet line, and a thermometer, was charged with N-vinylpyrrolidone 90 parts and with ion exchange water 206 parts. The inside of the polymerization container was set under nitrogen atmosphere by introducing nitrogen. Under stirring at room temperature, a 0.1% aqueous solution of copper sulfate 0.045 parts, a 25% aqueous solution of ammonia 0.5 parts, a 30% aqueous solution of hydrogen peroxide 2.1 parts were added to initiate polymerization. After the inside temperature was increased by polymerization heat, the mixture was kept stirring under heating for 1.5 hours at 80°C. Then, a 30% aqueous solution of hydrogen peroxide 1.0 part was added to the mixture and the mixture was further heated for 1 hour to produce a polymer solution. The obtained polymer solution was measured for the K value and the dye transfer ratio. Table 1 shows the results.

Comparative Example 2:

A polymer solution was produced by performing polymerization in the same manner as in Comparative Example 1, except that the 25% aqueous solution of ammonia 2 parts and the 30% aqueous solution of hydrogen peroxide 10 parts were used. The obtained polymer solution was measured for the K value, the dye transfer ratio, and the color-facing ratio. Tables 1 and 2 show the results.

Comparative Example 3:

A polymerization container equipped with a condenser, a nitrogen inlet line, and a thermometer, was charged with ion exchange water 82.2 parts. The inside of the polymerization container was set under nitrogen atmosphere by introducing nitrogen. The polymerization container was heated until the inside temperature reached 98°C. Then, under stirring, a monomer solution consisting of N-vinylpyrrolidone 90 parts, 2-mercaptoethanol 1.8 parts, and ion exchange water 90 parts and an initiator solution prepared by dissolving dimethyl 2,2'-azobis (2-methylpropionate) (product of Wako Pure Chemical Industries, Ltd., "V-601") 1.8 parts in 2-propanol 34.2 parts were each added dropwise continuously for 2 hours. Then, while the mixture was kept stirring under heating for 4 hours, an initiator solution obtained by dissolving 0.36 parts of V601 into 2-propanol 6.84 parts was added in two portions to produce a polymer solution. The obtained polymer solution was measured for the K value and the dye transfer ratio. Table 1 shows the results.

Comparative Example 4 :

A polymerization container equipped with a condenser, a nitrogen inlet line, and a thermometer, was charged with ion exchange water 100 parts. The inside of the polymerization container was set under nitrogen atmosphere by introducing nitrogen. The polymerization container was heated until the inside temperature reacted 98°C. Then, under stirring, a monomer solution consisting of N-vinylpyrrolidone 60 parts, a 30% solution of hypophosphorous acid 1.8 parts, a 25% aqueous solution of ammonia 0.7 parts, and ion exchange water 10.5 parts, and an initiator solution obtained by dissolving 4,4'-azobis-4-cyanovaleric acid (product of NIPPOH CHEMICALS CO., LTD., NC-25) 0.37 parts, and triethanolamine 0.42 parts in ion exchange water 29.2 parts were each added dropwise continuously for 1 hour. Then, while the mixture was kept stirring under heating for 1 hour, an initiator solution obtained by dissolving 0.07 parts of NC-25 and triethanolamine 0.08 parts in ion exchange water 1.3 parts was added in two portions to produce a polymer solution. The obtained polymer solution was measured for the K value and the dye transfer ratio. Table 1 shows the results.

Comparative Example 5 :

The polymerization was performed in the same manner as in Example 8, except that sodium hydrogensulfite was not used and only sodium sulfite was used.
Table 3 shows the results.

Comparative Example 6:

Polymerization was performed in the same manner as in Example 8, except that sodium sulfite was not used and only sodium hydrogensulfite was used. The obtained solution had a strong pungent odor and no polymer was determined by GPC.
Table 3 shows the results.

Comparative Example 7:

Polymerization was performed in the same manner as in Example 6, except that no copper (II) sulfate was used. However, no polymer was determined. Table 4 shows the results.

Comparative Example 8:

A polymerization container equipped with a condenser, a nitrogen inlet line, and a thermometer, was charged with on exchange water 100 parts, with N-vinylpyrrolidone 6.3 parts, with N-vinylimidazole 2.7 parts, and with 2-mercaptoethanol 0.54 parts. The inside of the polymerization container was set under nitrogen atmosphere by introducing nitrogen. The polymerization container was heated until the inside temperature reacted 75°C. Then, under stirring, a monomer solution 1 consisting of N-vinylpyrrolidone 56.7 parts, N-vinylimidazole 24.3 parts, and 2-mercaptoethanol 4.9 parts, and an initiator solution obtained by dissolving 2,2'-azobis(2-methylpropionamidine)dihydrochloride (product of Wako Pure Chemical Industries, Ltd., "V50") 1.8 parts in ion exchange water 34.2 parts were each added dropwise continuously for 2 hours. Then, while the mixture was kept stirring under heating for 2 hours, an initiator solution obtained by dissolving 0.9 parts of V50 in ion exchange water 17.1 parts was added in two portions to produce a polymer solution. The obtained polymer solution was measured for the K value and a dye adhesive ratio.
Table 5 shows the results.

Comparative Example 9 :

A polymerization container equipped with a condenser, a nitrogen inlet line, and a thermometer, was charged with ion exchange water 185 parts, with N-vinylpyrrolidone 63 parts, and with N-vinylimidazole 27 parts. The inside of the polymerization container was set under nitrogen atmosphere by introducing nitrogen. The polymerization container was heated until the inside temperature reacted 65°C. Then, under stirring, an initiator solution obtained by dissolving 2,2'-azobis(2-methylpropionamidine)dihydrochloride (product of Wako Pure Chemical Industries, Ltd., "V50") 1.8 parts in ion exchange water 10.8 parts were each added dropwise continuously for 1 hour. Then, while the mixture was kept stirring under heating for 7 hours, an initiator solution obtained by dissolving 0.9 parts of V50 in ion exchange water 5. 4 parts was added in two portions to obtain a polymer solution. The obtained polymer solution was measured for the K value and the dye adhesive ratio.

Table 5 shows the results.

"Measurement method of dye adhesive ratio"

(1) A cotton fabric in 8 cm x 8 cm (product of Testfabrics, Inc., Style#423 Bleached, Mercerized Cotton Twill) was measured for L, a, and b values with a color difference meter (product of Nippon Denshoku Industries Co., Ltd., NR-3000) (The values are defined as $L_0$, $a_0$, and $b_0$, respectively).

(2) Hard water 273 g prepared by dissolving calcium chloride dihydrate 4.85 g into ion exchange water 15 kg, a 1% by weight straight chain sodium alkylbenzene sulfonate 10.5 g, 1% by weight sodium carbonate 23.1 g, zeolite 0.42 g, a 0.35% by weight aqueous solution of a sample polymer 3.0 g, and a 0.1% aqueous solution of dye (Direct Blue 71) 2.0 g, and ion exchange water 6.6 g were charged into a 600 mL cylindrical container with a height of 12 cm and an inner diameter 8.5 cm). Then, the container was closed and shaken with a shaker for 1 minute at a room temperature.

(3) One cotton fabric was put into the container. Then, the container was shaken with a shaker for 1 hour at a room temperature.

(4) The cotton fabric was taken with tweezers and washed with ion exchange water 2 kg, and then dried at 80°C for 30 minutes using a hot air dryer.

(5) The obtained cotton fabric was measured for L, a, b values with the color difference meter (the obtained L, a, b values are defined as $L_1$, $a_1$, and $b_1$, respectively).

(6) Based on the L, a, b values measured in (1) and (5) of the cotton fabric, a $\Delta E$ value was calculated from the following formula in accordance with JIS 8730.

$$\Delta E = [(L_1 - L_0)_2 + (a_1 - a_0)_2 + (b_1 - b_0)_2]^{1/2}$$

(7) A measurement was performed in the same manner as in the above-mentioned (1) to (6) except that the polymer was not used to calculate a $\Delta E$ value.

(8) Based on the $\Delta E$ values obtained in the above-mentioned manner, a dye adhesive ratio was determined from the following formula: Dye adhesive ratio (%)=($\Delta E$ value in the measurement in which the polymer was added) / ($\Delta E$ value in the measurement in which the polymer was not added) x 100. The lower the obtained value is, the higher a dye adhesion-inhibiting effect and the above-mentioned dye transfer-inhibiting effect are.

[Table 1]

| | | Chain transfer agent | K value | Dye transfer ratio (%) |
|---|---|---|---|---|
| | Example 1 | Sodium 3-mercaptopropionate | 16.1 | 21 |
| | Example 2 | Sodium mercapto-1-propanesulfonate | 15.7 | 23 |
| | Example 3 | Ammonium hypophosphite | 17.3 | 22 |
| | Example 4 | Ammonium sulfite | 14.1 | 18 |
| | Example 5 | Sodium 3-mercaptopropionate | 21.5 | 24 |

(continued)

|  | Chain transfer agent | K value | Dye transfer ratio (%) |
|---|---|---|---|
| Example 6 | Sodium sulfite/Sodium hydrogensulfite | 15.7 | 18 |
| Example 7 | Sodium sulfite/Sodium hydrogensulfite | 14.5 | 18 |
| Example 8 | Sodium sulfite/Sodium hydrogensulfite | 15.8 | 19 |
| Example 9 | Sodium sulfite/Sodium hydrogensulfite | 16.2 | 18 |
| Reference Example 1 | Sodium sulfite/Sodium hydrogensulfite | 17.0 | 20 |
| Comparative Example 1 | - | 29.8 | 30 |
| Comparative Example 2 | - | 16.0 | 29 |
| Comparative Example 3 | 2-mercaptoethanol | 14.5 | 29 |
| Comparative Example 4 | Ammonium hypophosphite | 28.8 | 30 |

[Table 2]

|  | Initiator | Chain transfer agent | K value | Dye transfer ratio (%) | Color fading ratio (%) |
|---|---|---|---|---|---|
| Example 1 | V50 | Sodium 3-merzaptopropionate | 18.1 | 21 | 20 |
| Example 4 | TBHP | Ammonium sulfite | 14.1 | 18 | 18 |
| Example 6 | APS | Sodium sulfite/Sodium hydrogensulfite | 15.7 | 18 | 5 |
| Comparative Example 2 | $H_2O_2$ | - | 16.0 | 29 | 20 |
| TBHP:t-butyl hydroperoxide APS: ammonium persulfate | | | | | |

[Table 3]

|  | Example 4 | Example 6 | Example 7 | Example 8 | Comparative Example 5 | Comparative Example 6 |
|---|---|---|---|---|---|---|
| Initiator Sulfite | TBHP Ammonium sulfite | APS Sodium sulfite/ Sodium hydrogensulfite =50/50 | TBHP Sodium sulfite/ Sodium hydrogensulfile =25/75 | TBHP Sodium sulfite/ Sodium hydrogensulfite =50/50 | TBHP Sodium sulfite | TBHP Sodium sulfite |
| pH after | 9.3 | 8.2 | 7.6 | 9.3 | 11.0 | 2.6 |
| K value | 14.1 | 15.7 | 14.5 | 15.8 | 63.2 | No polymer |
| Odor | Exist | No exist | No exist | No exist | No exist | Exist |
| Ammonia content (%) | 1.9 | 0.16 | 0 | 0 | 0 | 0 |
| Sulfur content (%) | 0.61 | 0.63 | 0.63 | 0.60 | - | - |

(continued)

|  | Example 4 | Example 6 | Example 7 | Example 8 | Comparative Example 5 | Comparative Example 6 |
|---|---|---|---|---|---|---|
| Residual NVP | 10ppm or less | 10ppm or less | 10ppm or less | 949ppm | 15.7% | 3459ppm |
| TBHP:t-butyl hydroperoxide APS: Ammonium persulfate | | | | | | |

[Table 4]

|  | Example 6 | Example 9 | Reference Example 1 | Comparative Example 7 |
|---|---|---|---|---|
| Initiator | APS | APS | NaPS | APS |
| Sulfite | Sodium sulfite/ Sodium hydrogensulfite =50/50 | Sodium sulfite/ Sodium hydrogensulfite =65/35 | Sodium sulfite/ Sodium hydrogensulfite =50/50 | Sodium sulfite/ Sodium hydrogensulfits =50/50 |
| Heavy metal ion | Copper:200ppb | Iron:400ppb | Copper:200ppb | |
| pH after polymerization | 8.2 | 9.0 | 9.6 | - |
| K value | 15.7 | 16.2 | 17.0 | - |
| Odor | No exist | No exist | No exist | - |
| Ammonia content (%) | 0.16 | 0.24 | 0 | - |
| Residual NVP | 10ppm or less | 10ppm or less | 22560ppm | No polymerized |
| APS: Ammonium persulfate NaPS: Sodium persulfate | | | | |

[Table 5]

|  | Copolymer compositional ratio (wt%) | Chain transfer agent | K value | Sulfur content | Hazen color number of 30% aqueous solution | Dye adhesive ratio (%) |
|---|---|---|---|---|---|---|
| Example 10 | VP/VIm=70/30 | Ammonium sulfite | 14.3 | 0.65 | 100 | 5.8 |
| Comparative Example 8 | VP/VIm=70/30 | 2-mercaptoethanol | 13.2 | - | 300 | 8.8 |
| Comparative Example 9 | VP/VIm=70/30 | 2-mercaptoethanol | 25.7 | - | 350 | 9.4 |

**Claims**

1. A dye transfer inhibitor comprising a polymer,
   containing 90 % by weight or more of vinyl lactam units,
   wherein

said polymer comprises a K value of from 12 to 18; and

said polymer contains sulfur derived from a sulfite, and

the content of said sulfur derived from a sulfite amounts of from 0.1 to 2.0 % by weight, referring to the weight of the polymer; and

said dye transfer inhibitor contains an acid group containing chain transfer agent.

2. A laundry detergent composition

comprising

the dye transfer inhibitor of Claim 1.

3. A vinyl lactam homopolymer

wherein

said vinyl lactam homopolymer comprises a K value of from 12 to 18; and

said vinyl lactam homopolymer contains sulfur derived from a sulfite; and

the content of said sulfur derived from a sulfite amounts of from 0.1 to 2.0 % by weight, referring to the weight of the polymer; and

said vinyl lactam homopolymer contains ammonia in a content of from 0.3 % by weight or less.

4. A vinyl lactam copolymer

wherein

said vinyl lactam copolymer comprises a K value of from 12 to 18; and

said vinyl lactam copolymer contains sulfur derived from a sulfite; and

the content of said sulfur derived from a sulfite amounts of from 0.1 to 2.0 % by weight, referring to the weight of the polymer.

5. A method for producing the vinyl lactam copolymer of Claim 4 under radicalic polymerization conditions, wherein

said polymerization is performed in an aqueous solution having a pH of from 5 to 10; and

using hydroperoxide and an alkali metal sulfite.

6. A method for producing the vinyl lactam copolymer of Claim 4, comprising

a step of performing a polymerization reaction using a persulfate, a sulfite, and a heavy metal compound.

**Patentansprüche**

1. Farbstofftransferinhibitor, enthaltend ein Polymer, enthaltend 90 Gew.-% oder mehr von Vinyllactameinheiten, wobei

das Polymer einen K-Wert von 12 bis 18 aufweist; und das Polymer Schwefel enthält, abgeleitet von einem Sulfit, und der Gehalt von Schwefel, abgeleitet von einem Sulfit, von 0,1 bis 2,0 Gew.-% beträgt, bezogen auf das Gewicht des Polymers; und der Farbstofftransferinhibitor eine Säuregruppe enthält, die ein Kettentransferagens enthält.

2. Waschmittelzusammensetzung, enthaltend den Farbstofftransferinhibitor nach Anspruch 1.

3. Vinyllactamhomopolymer, wobei das Vinyllactamhomopolymer einen K-Wert von 12 bis 18 aufweist; und das Vinyllactamhomopolymer Schwefel enthält, abgeleitet von einem Sulfit; und der Gehalt von Schwefel, abgeleitet von einem Sulfit, von 0,1 bis 2,0 Gew.-% beträgt, bezogen auf das Gewicht des Polymers; und das Vinyllactamhomopolymer Ammoniak in einem Gehalt von 0,3 Gew.-% oder weniger enthält.

4. Vinyllactamcopolymer, wobei das Vinyllactamcopolymer einen K-Wert von 12 bis 18 aufweist; und das Vinyllactamcopolymer Schwefel enthält, abgeleitet von einem Sulfit; und der Gehalt von Schwefel, abgeleitet von einem Sulfit, von 0,1 bis 2,0 Gew.-% beträgt, bezogen auf das Gewicht des Polymers.

5. Verfahren zur Herstellung des Vinyllactamcopolymers nach Anspruch 4 unter radikalischen Polymerisationsbedingungen, wobei die Polymerisation in einer wässrigen Lösung mit einem pH von 5 bis 10 durchgeführt wird; und unter Verwendung von Hydroperoxid und einem alkalischen Metallsulfit.

**6.** Verfahren zur Herstellung des Vinyllactamcopolymers nach Anspruch 4, enthaltend einen Schritt der Durchführung einer Polymerisationsreaktion unter Verwendung eines Persulfats, eines Sulfits, und einer Schwermetallverbindung.

**Revendications**

**1.** Inhibiteur de transfert de colorant comprenant un copolymère contenant 90 % en poids ou plus d'unités de vinyllactame,
dans lequel :

ledit polymère comprend une valeur K de 12 à 18 ; et
ledit polymère contient du soufre provenant d'un sulfite et le contenu dudit soufre tiré d'un sulfite se monte à 0,1 à 2,0 % en poids, en se référant au poids du polymère ; et
ledit inhibiteur de transfert de colorant contient un groupement acide contenant un agent de transfert de chaîne.

**2.** Composition détergente de lavage de linge, comprenant :

l'inhibiteur de transfert de colorant de la revendication 1.

**3.** Homopolymère de vinyllactame,
dans lequel :

ledit homopolymère de vinyllactame comprend une valeur K de 12 à 18 ; et
ledit homopolymère de vinyllactame contient du soufre tiré d'un sulfite ; et
le contenu dudit soufre tiré d'un sulfite se monte à 0,1 à 2,0 % en poids, en se référant au poids du polymère ; et
ledit homopolymère de vinyllactame contient de l'ammoniac à raison de 0,3 % en poids ou moins.

**4.** Copolymère de vinyllactame,
dans lequel :

ledit copolymère de vinyllactame comprend une valeur K de 12 à 18 ; et
ledit copolymère de vinyllactame contient du soufre tiré d'un sulfite ; et
le contenu dudit soufre tiré d'un sulfite se monte à 0,1 à 2,0 % en poids, en se référant au poids du polymère.

**5.** Procédé de production du copolymère de vinyllactame selon la revendication 4 dans des conditions de polymérisation radicale, dans lequel :

ladite polymérisation est réalisée dans une solution aqueuse ayant un pH de 5 à 10 ; et
en utilisant un hydroperoxyde et un sulfite de métal alcalin.

**6.** Procédé de production du copolymère de vinyllactame selon la revendication 4,
comprenant :

une étape de réalisation d'une réaction de polymérisation en utilisant un persulfate, un sulfite et un composé de métal lourd.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 994635
- JP 3272362 B
- JP 3272359 B
- JP 2001517730 A
- JP 2002020421 A
- EP 1219647 A1
- JP HEI1171414 B